Europäisches Patentamt

**European Patent Office**

**Office européen des brevets**

(11) Veröffentlichungsnummer: **0 017 654**
**A1**

## EUROPÄISCHE PATENTANMELDUNG

(21) Anmeldenummer: **79101146.3**

(22) Anmeldetag: **14.04.79**

(51) Int. Cl.³: **H 01 F 7/18**

(43) Veröffentlichungstag der Anmeldung: **29.10.80**
**Patentblatt 80/22**

(71) Anmelder: **SEW-Eurodrive GmbH & Co. Süddeutsche Elektromotoren-Werke, Durlacher-Strasse 5-7, D-7520 Bruchsal (DE)**

(72) Erfinder: **Trümpler, Walter, Ing.grad., Kleinbachstrasse 21, D-7500 Karlsruhe 41 (DE)**

(74) Vertreter: **Lichti, Hans, Dr. Ing. et al, Durlacher Strasse 31 Postfach 410760, D-7500 Karlsruhe 41 (Grötzingen) (DE)**

(84) Benannte Vertragsstaaten: **BE CH FR GB IT NL SE**

(54) **Anordnung zum Steuern des Ein- und Ausschaltverhaltens von Induktivitäten, wie Elektromagneten od. dgl.**

(57)     Beim Ein- und Ausschalten von Induktivitäten wie Elektromagneten od. dgl., insbesondere von mit Gleichstrom erregten Bremsspulen von elektromagnetischen Bremsen bei Elektromotoren, wird angestrebt, daß der Strom schnell auf den vorgesehenen Wert ansteigt bzw. auf Null abfällt, damit der Elektromotor beim Anlaufen nicht überlastet wird und beim Ausschalten nur für möglichst kurze Zeit nachläuft. Die Aufgabe, eine einfache, funktionssichere und in konstruktiver Hinsicht vom Motor unabhängige elektrische Schaltungsanordnung anzugeben, mit der Anstiegs- und Abfallgeschwindigkeit eines Spulenstroms, insbesondere des Stroms in der Bremsspule eines Elektromotors, verbessert werden können, wird dadurch gelöst, daß der Induktivität 5, 6 eine als Spannungsverdoppler arbeitende doppelte Einweggleichrichterschaltung 1 vorgeschaltet ist.

DR. ING. HANS LICHTI · DIPL.-ING. HEINER LICHTI
DIPL.-PHYS. DR. KLAUS LEUTWEIN
PATENTANWÄLTE

D-7500 KARLSRUHE 41 (GRÖTZINGEN) · DURLACHER STR. 31 (HOCHHAUS)
TELEFON (0721) 48511 · TELEX 7825986 LIPA D

0017654

SEW-Eurodrive GmbH & Co.
Süddeutsche Elektromotoren-Werke
7520 Bruchsal

Anordnung zum Steuern des Ein- und Ausschaltverhaltens von Induktivitäten, wie Elektromagneten od. dgl. .

Die Erfindung betrifft eine Anordnung zum Steuern des Ein- und Ausschaltverhaltens von Induktivitäten, wie Elektromagneten od. dgl., insbesondere
des Ein- und Ausschaltstroms der mit Gleichstrom erregten Bremsspule von
elektromagnetischen Bremsen bei Elektromotoren.

Bei Induktivitäten, insbesondere Elektromagneten besteht vielfach das Bedürfnis wegen des aufgrund der exponentiellen Abhängigkeit nur langsam ansteigenden und beim Abschalten ebenfalls nur langsam abklingenden Stroms
das Ein- und Ausschaltverhalten zu beeinflussen.

Bei elektromagnetischen Bremsen von Elektromotoren besteht dieses Bedürfnis um so mehr, als beim Anfahren wegen des gewünschten schnellen Hochlaufs die Bremse schnell gelüftet und beim Abschalten wegen der erwünschten sofortigen Abbremsung ebenfalls schnell einfallen soll.

Aus Sicherheitsgründen sind solche elektromagnetisch gebremsten Motoren in ausgeschaltetem Zustand mechanisch gebremst, damit auch bei Netzausfüllen die Bremswirkung stets gewährleistet ist. Erst beim Einschalten wird die Bremse von der als Elektromagnet wirkende Bremsspule dadurch gelüftet, daß das mechanisch wirkende, eigentliche Bremselement, meist eine Scheibe, magnetisch angezogen und die Bremse dadurch gelöst wird. Beim Einschalten wird der Motor, der schneller anläuft, als die Bremse löst, überbelastet, da er in dieser Phase von der Bremse blockiert oder zumindest beim Hochlauf verzögert wird. Ein ähnliches Verhalten zeigen Motoren, deren elektromagnetische Bremse in Ermangelung eines gesonderten Gleichstromnetzes aus einem einen Freilaufzweig bildenden, die an den Feldwicklungen des Elektromotors anliegenden Wechselspannung gleichrichtenden Gleichrichter gespeist wird. Außerdem läuft der Motor hierbei nach dem Ausschalten kurze Zeit frei aus bis zu dem Zeitpunkt, zu dem die Bremse einfällt. Dieses Bremsverhalten ist äußerst unerwünscht und beim Einsatz eines solchen gebremsten Elektromotors beispielsweise bei Hebezeugen wegen des Durchsackens der angehobenen Last außerdem gefährlich.

Ein elektromagnetisch gebremster Elektromotor des erläuterten Aufbaus mit einer Anordnung der eingangs beschriebenen Gattung ist bekannt (vgl. DT-AS 22 57 290). Die Bremsspule ist hier mit einem zugleich als Freilaufdiode dienenden Gleichrichter verbunden und wird induktiv über eine mit einer Feldwicklung des Motors in Serie geschaltete Hilfswicklung gespeist.

Es erfolgt dabei eine Transformation des Motorstroms mit anschließender Gleichrichtung des transformierten Stroms, die Bremsspule wird mit dem transformierten und gleichgerichteten Motorstrom gespeist. Bei einer wechselspannungsseitigen Ausschaltung des Motors wird zugleich der Strom durch die die Bremse in gelüfteter Stellung haltende Bremsspule unterbrochen, so daß die Bremse einfällt.

Bei dieser bekannten Anordnung ist zwar die Anzugszeit beim Lösen der Bremse in Folge des hohen Anfangsstroms beim Anlaufen des Motors verhältnismäßig kurz. Allerdings ist dazu ein verhältnismäßig hoher Aufwand in Form der besonderen Hilfswicklung erforderlich, die außerdem so angeordnet werden muß, daß in der Bremsspule eine Spannung induziert wird. Nachteilig ist dabei weiter, daß beim Anlaufen unzulässig hohe Stromspitzen auftreten können, während für eine optimale Funktion der Bremse zwar ein steiler Stromanstieg wünschenswert ist, nicht aber unkontrolliert hohe Stromspitzen erreicht werden sollen. Es kommt hinzu, daß der in der Bremsspule fließende Strom in unerwünschtem Maße motorstromabhängig ist. Außerdem können sich bei polumschaltbaren Motoren Schwierigkeiten ergeben, wenn nämlich die Umschaltung auf verschiedene Wicklungssysteme zu unterschiedlichen Stromaufnahmen führt. Zur Behebung dieser Nachteile ist bei der bekannten Anordnung vorgesehen, daß die Bremsspule zusätzlich über einen Gleichrichter aus den den Motor speisenden Netz versorgt, d.h. zu einem gewissen Anteil auch durch die gleichgerichtete, die Feldwicklung speisende Wechselspannung gespeist wird. Das erfordert jedoch weiteren Aufwand.

Der Erfindung liegt die Aufgabe zugrunde, eine einfache, funktionssichere und in konstruktiver Hinsicht vom Motor unabhängige elektrische Anordnung zu schaffen, mit der Anstiegs- und Abfallgeschwindigkeit eines Spulenstroms, insbesondere des Stroms in der Bremsspule eines Elektromotors verbessert werden können.

0017654

Diese Aufgabe wird erfindungsgemäß dadurch gelöst, daß der Induktivität eine als Spannungsverdoppler arbeitende doppelte Einweggleichrichterschaltung - auch sogenannte "Delonschaltung" - vorgeschaltet ist, bei der parallel zu Induktivität zwei Kondensatoren in Serie liegen, deren Mittelabgriff direkt mit der einen Phase und deren äußere Anschlüsse über je eine Diode mit der anderen Phase einer Wechselspannungsquelle verbunden sind und bei denen jeweils verschiedene Elektroden jeder Diode - die Anode der einen mit der Kathode der anderen Diode und umgekehrt - zusammengeschaltet sind.

Das hat beim Einschalten die Wirkung, daß der Einschaltstrom durch die Induktivität wegen der hohen Zeitkonstante in diesen Stromkreis zunächst nur gewöhnlich exponentiell ansteigt. Der durch diesen Kreis fließende geringe Strom hat jedoch zur Folge, daß die Kondensatoren sich zu Beginn der Einschaltphase auf eine sehr hohe Spannung aufladen können. Diese wiederum beschleunigt den Stromanstieg erfindungsgemäß in gewünschter Weise stark, so daß dem gewöhnlichen exponentiellen Anstieg des Stroms durch die Induktivität der Entladestrom der inzwischen aufgeladenen Kondensatoren überlagert wird.

Beim Abschalten bilden die beiden Dioden in an sich bekannter Weise einen Freilaufzweig für den Laststrom.

Mit der Erfindung wird der Vorteil erreicht, daß eine einfache und gesonderte elektrische Anordnung zur Beeinflussung des Einschaltstroms durch die Induktivität bereitgestellt wird, die darüber hinaus konstruktionsunabhängig ist, was den zusätzlichen Vorteil ausmacht, daß bekannte Einrichtungen, beispielsweise Motoren schnell und einfach mit der erfindungsgemäßen Anordnung nachgerüstet werden können, so daß beispielsweise beim Einschalten des Elektromotors dessen Bremse schnell in vorstehend geschilderter Art und Weise gelöst wird. Darüber hinaus zeichnet sich die erfindungsgemäße Anordnung durch einen einfachen Aufbau und hohe Funktionssicherheit aus, weil sie Kurzschlußfest ist. Sollte die Induktivität kurzgeschlossen sein, so liegen die beiden Kondensatoren direkt an der Eingangsspannung, hierdurch stellt sich ein durch den kapazitiven Widerstand der beiden Kondensatoren begrenzter Strom ein. Ferner ist der Strom durch die Induktivität, im Gegensatz zu der bekannten gattungsgemäßen Anordnung von der mechanischen Belastung des Motors und damit dem Motorstrom unabhängig, er hängt vielmehr nur von der Versorgungsspannung und dem Widerstand der Bremsspule ab. In dieser Hinsicht besteht ein weiterer, wesentlicher Vorteil der erfindungsgemäßen Anordnung in der geringen Abhängigkeit von Änderungen des Bremsspulenwiderstands, die beispielsweise durch Temperaturänderungen verursacht sein können. Tritt zum Beispiel eine Erwärmung der Bremsspule mit entsprechender Widerstandszunahme ein, so führt die infolgedessen abnehmende Strombelastung zu einer Erhöhung der Bremsenspannung, so daß die durch die Widerstandszunahme verursachte Abnahme des Bremsenstroms teilweise kompensiert wird.

Zur Verbesserung des Ausschaltverhaltens ist ferner erfindungsgemäß vorgesehen, daß in dem die beiden äußeren Anschlüsse der Kondensatoren über die Dioden verbindenden Stromkreis ein Schalter angeordnet ist, der vorzugsweise zwischen den beiden Dioden angeordnet und mit einem Anschluß an die Phase der Spannungsquelle angeschlossen ist. Mit diesem Schalter, der zweckmäßig im Augenblick des Ausschaltens des Motors auf der Wechselstromseite betätigt wird, kann der Ausschaltstrom darüber hinaus noch gleichstromseitig beeinflusst werden, indem der Freilaufstromzweig unterbrochen wird. Hierbei entlädt der Ausschaltstrom die Kondensatoren, bzw. lädt sie mit umgekehrter Polarität auf und nimmt infolge der Gegenspannung schnell ab.

0017654

Da die beiden Kondensatoren mit der Induktivität einen durch den Ohmschen Widerstand stark gedämpften Schwingkreis bilden, wird der weitere Vorteil erreicht, daß die stark gedämpften Ausschaltschwingungen die Remanenz im Eisenkern der Induktivität verringert.

Zur Verbesserung des vorstehend beschriebenen Ausschaltverhaltens des in Form einer gedämpften Ausschaltschwingung abklingenden Ausschaltstroms ist desweiteren erfindungsgemäß vorgesehen, daß jede Diode über einen Schalter an die eine Phase der Spannungsquelle angeschlossen und die mit den Dioden verbundenen Anschlüsse der beiden Schalter mittels eines Widerstandes überbrückt sind. Diese Anordnung vermittelt den Vorteil, daß die Schwingkreisgüte verringert wird und damit unzulässig hohe Spannungen an den Kondensatoren unterbunden werden. Außerdem führt die stärkere Dämpfung in vorteilhafter Weise zu geringeren Amplituden der Ausschaltschwingungen des Ausschaltstroms.

Wesentlich ist dabei, daß die beiden Schalter erfindungsgemäß zugleich zur gleichen - und zur wechselstromseitigen Abschaltung der Bremsspule dienen. Die Schalter sind zweckmäßigerweise als Schütze ausgebildet und mechanisch und/oder elektromechanisch miteinander gekoppelt.

Weitere Merkmale, Einzelheiten und Vorteile der Erfindung ergeben sich aus der nachfolgenden Beschreibung einiger Ausführungsformen. Es zeigen:

Figur 1    eine der Induktivität vorgeschaltete elektrische Anordnung,

Figur 2    die mit einem Schalter versehene Anordnung gemäß Figur 1,

Figur 3    die mit zwei Schaltern und einem zusätzlichen Widerstand versehene Anordnung gemäß Figur 1,

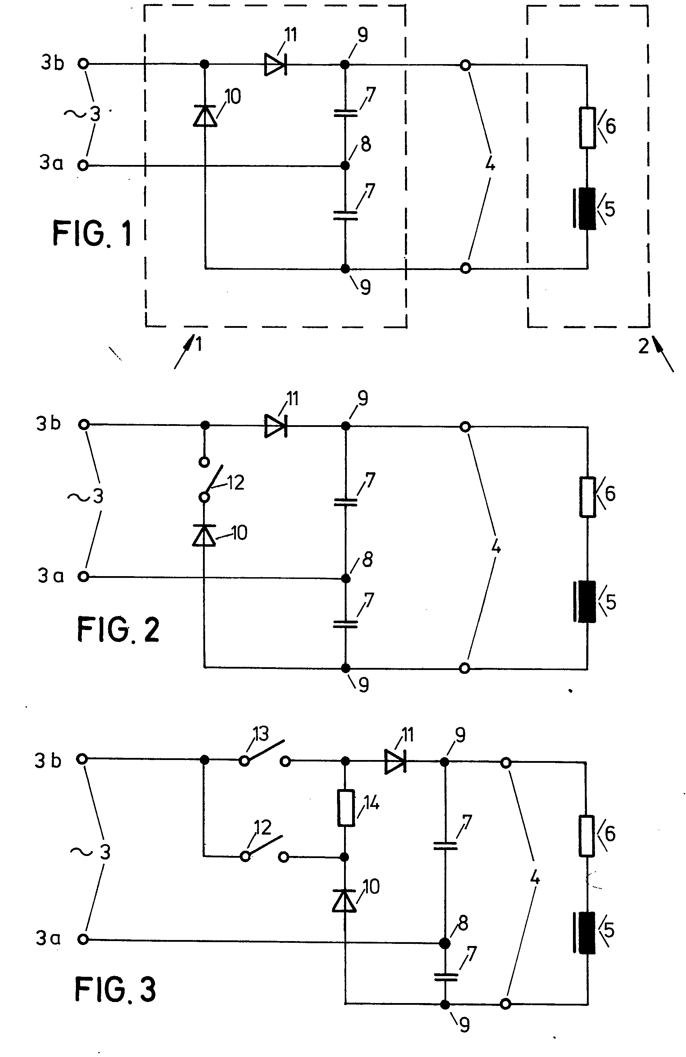

Der insgesamt mit 2 bezeichneten Bremsenspule gemäß Figur 1 ist eine elektrische Anordnung 1 vor geschaltet. Deren Eingangsanschlüsse 3 werden mit einer in der Zeichnung nicht dargestellten Wechselspannungsquelle, die beispielsweise auch die Feldwicklung eines Elektromotors speist, verbunden. Die Ausgänge 4 der Anordnung 1 sind mit den beiden Anschlüssen der insgesamt mit 2 bezeichneten Bremsenspule verbunden. Diese ist als eigentliche Induktivität mit Eisenkern und einem dazu in Serie geschalteten Widerstand 6 dargestellt. Die Bremsenspule 2 zieht beim Einschalten des Motors ein - in der Zeichnung nicht dargestelltes - Bremselement, meist eine Scheibe, aufgrund magnetischer Kraft an, wodurch die rein mechanisch wirkende Bremse ausgelöst, das heißt gelüftet wird.

Die Anordnung 1 stellt eine sogenannte Spannungsverdoppler-, auch doppelte Einweggleichrichter- oder sogenannte "Delon-Schaltung" dar. Sie besteht aus zwei in Serie zueinander und parallel zum Ausgang 4 geschalteten Kondensatoren 7, deren Mittelabgriff 8 mit der einen Phase 3a einer Wechselspannungsquelle verbunden ist. Die beiden äußeren Anschlüsse 9 der Kondensatoren 7 sind über je eine Diode 10, 11 mit der anderen Phase 3b der Wechselspannungsquelle verbunden, wobei die Diode 10 mit ihrer Kathode, die Diode 11 mit ihrer Anode an der Phase 3b anliegen.

Figur 2 entspricht der Anordnung 1 gemäß Figur 1, lediglich mit dem Unterschied, daß in dem durch die Dioden 10, 11 gebildeten Freilauf- stromkreis ein Schalter 12 angeordnet ist, der zwischen den beiden Dioden 10, 11 angeordnet ist.

Zur weiteren Verbesserung des Ausschaltverhaltens gegenüber der Anordnung gemäß Figur 2 zeigt Figur 3 eine weitere Anordnung, bei der neben dem Schalter 12 ein weiterer Schalter 13 in dem Freilaufstromkreis angeordnet ist. Somit ist jede Diode 10, 11 über einen Schalter 12 bzw. 13 mit der einen Phase 3b der Wechselspannungsquelle verbunden. Zusätzlich sind die beiden diodenseitigen Anschlüsse der Schalter 12, 13 mittels eines Widerstandes 14 überbrückt.

SEW-Eurodrive GmbH & Co
Süddeutsche Elektromotoren-Werke

D-7520 Bruchsal

Patentansprüche

1. Anordnung zum Steuern des Ein- und Ausschaltvorgangs von Induktivitäten, wie Elektromagneten od.dgl., insbesondere des Ein- und Ausschaltstroms der mit Gleichstrom erregten Bremsenspule von elektromagnetischen Bremsen bei Elektromotoren, dadurch gekennzeichnet, daß der Induktivität (5,6) eine als Spannungsverdoppler arbeitende doppelte Einweggleichrichterschaltung (1) vorgeschaltet ist.

2. Anordnung nach Anspruch 1, dadurch gekennzeichnet, daß parallel zur Induktivität (5,6) zwei Kondensatoren (7) in Serie liegen, deren Mittelabgriff (8) direkt mit der einen Phase (3a) und deren äußere Anschlüsse (9) über je eine Diode (10,11) mit der anderen Phase (3b) einer Wechselspannungsquelle (3) verbunden sind, und daß verschiedene Elektroden jeder Diode (10,11) zusammengeschaltet sind.

3. Anordnung nach Anspruch 1, insbesondere Anspruch 2, dadurch gekennzeichnet, daß in dem die beiden äußeren Anschlüsse (9) der Kondensatoren (7) über die Dioden (10,11) verbindenden Stromkreis (9,10,11) ein Schalter (12) angeordnet ist.

4. Anordnung nach Anspruch 3, dadurch gekennzeichnet, daß der Schalter (12) zwischen den beiden Dioden (10,11) angeordnet ist

0017654

und mit einem Anschluß an die eine Phase (3b) der Spannungsquelle angeschlossen ist.

5. Anordnung nach Anspruch 1, insbesondere Anspruch 2, dadurch
gekennzeichnet, daß jede Diode (10, 11) über je einen Schalter
(12, 13) an die eine Phase (3b) der Spannungsquelle angeschlossen
ist und die mit den Dioden (10, 11) verbundenen Anschlüsse der
beiden Schalter (12, 13) mittels eines Widerstandes (14) überbrückt
sind.

6. Anordnung nach einem der Ansprüche 3 bis 5, dadurch gekennzeichnet, daß die Schalter (12, 13) als Schütze ausgebildet sind.

7. Anordnung nach einem der Ansprüche 3 bis 6, dadurch gekennzeichnet, daß die Schalter (12, 13) mechanisch und/oder elektromechanisch gekuppelt sind.

FIG.1

FIG.2

FIG.3

# EUROPÄISCHER RECHERCHENBERICHT

**Europäisches Patentamt**

Nummer der Anmeldung 0017654

EP 79 10 1146

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 1 501 095</u> (EATON YALE)<br>* Seite 2, rechte Spalte, Absatz 3; Seite 3, rechte Spalte, Absätze 2,3 *<br><br>-- | 1,2 |
| | <u>US - A - 2 692 353</u> (WARNER)<br>* Spalte 5, Zeilen 38-75; Spalte 6, Zeilen 1-5 *<br><br>-- | 1,2 |
| A | <u>DE - A - 1 414 722</u> (ABEX INT.)<br><br>---- | |

**KLASSIFIKATION DER ANMELDUNG (Int.Cl. 3)**

H 01 F 7/18

**RECHERCHIERTE SACHGEBIETE (Int. Cl. 3)**

H 01 F 7/18
H 01 F 7/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26.10.1979 | VAN HULLE |

EPA form 1503.1   06.78